# EUROPEAN PATENT APPLICATION

(11) **EP 4 098 634 A1**
(43) Date of publication of application: **07.12.2022**
(21) Application number: 21177507.7
(22) Date of filing: 02.06.2021
(51) Int. Cl.: C04B 7/24, C04B 28/00, C04B 28/02, C04B 28/08

(54) **IRON-CONTAINING BINDER**

(71) Applicant: ResourceFull BV, 3000 Leuven (BE)
(72) Inventor: ARNOUT, Lukas, B-3010 Kessel-Lo (BE); DIQUELOU, Youen, B-4690 Glons (BE); LAPAUW, Thomas, B-3010 Kessel-Lo (BE)
(74) Representative: IPLodge bv

(57) **Abstract**

The invention pertains to a binder composition for mortar or concrete, comprising an iron-containing silicate precursor, wherein said silicate precursor comprises at least 20 wt% Fe, calculated as if present in the form Fe₂O₃, and at most 80 wt% Fe, calculated as if present in the form Fe₂O₃, with reference to the dry composition, and wherein said silicate precursor comprises at most 30 wt% Al₂O₃, with reference to the dry composition; an alkali-containing activator; and an iron-complexing agent.

## Description

### Technical Field

The present invention relates to an iron-containing binder composition for a concrete or a mortar. The present invention further relates to a concrete composition containing said binder composition and to the use of said binder composition in a concrete or a mortar.

### Background Art

The production of construction materials has a tremendous impact on the emission of greenhouse gases. One of the main contributors is the production of cement (e.g., ordinary Portland cement or OPC). It is estimated that the cement industry produces about 7% of the man-made carbon dioxide released in the atmosphere. Nearly all this carbon dioxide is emitted during the production of clinker, with the calcination of limestone being roughly responsible for three quarters and the burning of fossil-based fuel used to heat the raw materials in the kiln responsible for the remaining quarter of the emitted carbon dioxide (A.P. Fantilli et al. « The carbon footprint of normal and high-strength concrete used in low-rise and high-rise buildings" https://doi.org/10.1016/j.cscm.2019.e00296). All in all, it can be estimated that, for every kg of cement, around 0.8 kg of carbon dioxide is produced. Cement production has a further negative environmental impact due to a high usage of primary raw materials and the release of hazardous particles during the production process.

In order to reduce the impact, alternative and more sustainable construction materials have been investigated. The use of alkali-activated materials as an alternative for OPC has been explored in the past. It is commonly known that various at least partially amorphous residues can be used as a precursor for an alkali-activated binder. Alkali-activation technology has been used to produce inorganic alternatives for cement for over a century, as a means for valorising wastes or industrial by-products derived from different commercial activities. The basic principle is the dissolution of a precursor in an alkaline environment followed by the precipitation of a durable body. By controlling these reactions, it is possible to use a combination of an amorphous precursor and an alkali-activator in a similar way as e.g. ordinary Portland cement (OPC). Hence, an alternative to OPC-based concrete can be obtained. It has been found that some of these binder combinations lead to a concrete which has a higher durability under chloride, carbonate and sulphate exposure and can have higher strengths than OPC-based concretes.

Ground granulated blast furnace slags (GGBFS), derived from the iron-making industry, fly ashes obtained from coal-burning powerplants and calcined clays, specifically calcined kaolinite (metakaolin, MK) have been widely utilized for the production of alkali-activated cements. GGBFS and some types of fly ashes are thereby considered to be Ca-rich compounds, whereas other fly ashes and MK are grouped as aluminosilicates.

WO 2019/110134 A1 discloses a slag-based binder comprising at least one GGBFS slag, at least one carbonate-containing mineral powder, at least one activator and at least one chelatant. The combination of these elements leads to an increase in final strength of the hardened concrete/mortar.

Apart from these broadly investigated residues, another subgroup of amorphous, siliceous materials, such as metallurgical slags, which currently have little or no commercial value, can be used as a precursor for producing alkali-activated cements. The distinction of this subgroup is based on the iron-content, which tends to be higher than for GGBFS, MK residues or most fly ashes. Examples of this group include amorphous Fe-rich residues, which can be obtained as slags from non-ferro metallurgy, as well as certain steel slags, red mud and treated by-products of aluminium production and iron-rich clays. Alkali-activation of these iron-rich residues has been performed by solely activating the residue with an activator or by combining the iron-rich residue with a second residue or cement, in further combination with an alkali activator.

WO 2020/025691 A1 discloses a binder with a high total content of Fe-rich phases, the binder comprising a Fe-rich glass or Fe-rich metallurgical slag, a Ca-rich additive, wherein the additive comprises more than 30 wt% Ca, expressed as calcium oxide and an alkali source. OPC types of cement, clinkers, carbonates and silicates of calcium are used as Ca-rich additive.

The extent to which cement can be replaced by an iron-rich alternative remains all in all limited. This is for a major part due to the limited mobility and solubility of the Fe-containing species, which only participates to a small degree in the hydration of the final product. The ineffective usage of Fe-rich residues results in a limited strength development profile. The strength of the material is typically very closely related to the durability of the material. Hence, due to the currently limited strength, use of iron-rich residues remains limited and its potential is underused. The main difficulty to overcome remains the generally lower hydraulic reactivity of these slags compared with e.g. GGBFS.

As iron-rich residues are produced in high volumes, there remains however a strong incentive to find applications for these waste materials. There therefore remains a need to overcome the hurdle of limited reactivity, enabling iron-rich residues to be used in a binder for replacing cement in OPC-based concretes and mortars.

### Summary of the invention

According to an aspect of the invention, there is provided a binder composition for a mortar or concrete, comprising:
a) An iron-containing silicate precursor, wherein said silicate precursor comprises at least 20 wt% Fe, calculated as if present in the form Fe₂O₃, and at most 80 wt% Fe, calculated as if present in the form Fe₂O₃, with reference to the dry composition, and wherein said silicate precursor comprises at most 30 wt% Al₂O₃, with reference to the dry composition;
b) An alkali-containing activator; and
c) An iron-complexing agent.

It is an advantage of the present invention that a binder is provided which may be used as an alternative for cement, e.g. OPC, in the production of a concrete or mortar. Hence, the binder as described herein may be used to replace cement in concrete or mortar materials, e.g. OPC-based concrete. Advantageously, dumping of Fe-rich residues, such as iron-containing silicates and iron-rich slags, can be avoided, as these materials can now be used in a valuable application.
It is a further advantage that a binder is provided which allows to overcome the hurdle of limited mobility and solubility of the Fe-rich species. Indeed, it has been found that a combination of an iron-containing silicate precursor with an alkali activator and an iron-complexing agent as described herein, defines a binder composition which allows for a construction material which has an improved strength development profile. As supported by the experimental results herein, it has advantageously been found that such selected additives, being the alkali activator and the iron-complexing agent, act on the early as well as late strength development of the construction material. It has furthermore been found that compressive strengths measured at different moments after mixing the concrete or mortar based on the binder as described herein, can have a value which may be at least 5%, 10%, 15%, 20%, 25% or even 30% higher than the values measured for similar binder compositions lacking at least one of said alkali activator or iron-complexing agent as described herein. Such improvements may be measured from day 2, day 7 or day 28 onwards.
It is a further advantage of the present invention that concrete or mortar materials that are produced based on the binder composition described herein have a low shrinkage, a high freeze-thaw resistance and a good fire resistance.
A further advantage of the invention is that said concrete or mortar materials are relatively easy to recycle, compared to OPC-based concretes, are easy to work with and can easily be put into industrial production. It is a further advantage that said concrete or mortar materials combine a high strength with a comparatively low level of CaO, the latter having the effect of improving the resistance of said materials to sulphates.

In an embodiment of the composition according to the present invention, said binder comprises from 30 to 99.8 wt% of said iron-containing silicate precursor a), from 0.1 to 15 wt% of said alkali-containing activator b), and from 0.001 to 5 wt% of said iron-complexing agent c) with reference to the dry composition.

It is an advantage of this embodiment that activator concentrations in the binder compositions are comparatively low in view of other compositions that lead to concrete or mortar-like materials with comparative strength. Hence, the overall cost of the binder composition according to the invention is low compared to other such compositions.

In an embodiment of the composition according to the present invention, said iron-containing silicate precursor a) further comprises at least 10 wt% and at most 50 wt% SiO₂, with reference to the dry composition.

In an embodiment of the composition according to the present invention, said iron-containing silicate precursor a) may be selected from the following:
- a slag, wherein said slag may be a non-ferrous metallurgical slag, such as a zinc metallurgical slag, a nickel metallurgical slag, a lead metallurgical slag, a tin metallurgical slag, or a copper metallurgical slag,
- a stainless-steel slag or ferrous metallurgical slag;
- red mud;
- fly ash;
- bottom ash;
- Fe-containing clay or Fe-containing calcined clay;
- Fe-containing waste glass
and mixtures thereof.

It is an advantage of this embodiment that materials which so far have been considered as waste products of other processes, such as metallurgical processes or coal combustion processes, but which are produced in considerable volume, now have a valuable application.

In an embodiment of the composition according to the present invention, at least 30 wt% of said iron-containing silicate precursor a) is amorphous.

It is an advantage of this embodiment that such a precursor may be used to produce concrete or mortarlike materials having a high compressive strength as described herein. It has been found that a high degree of amorphousness contributes to the strength of the final material.

In an embodiment of the composition according to the present invention, said alkali-containing activator b) comprises at least one salt or salt solution of an alkali metal or earth alkali metal.

In an embodiment of the composition according to the present invention, said alkali-containing activator b) comprises at least one oxide, hydroxide, silicate, carbonate, aluminate, sulphate, fluoride, fluorosilicate, aluminosulphate, fluoroaluminate (or aluminium hexafluoride) of an alkali metal or earth alkali-metal, or mixtures thereof.

In an embodiment of the composition according to the present invention, the iron-complexing agent c) comprises at least one salt having a functional group selected from sulphonate, cyanide, phosphate, phosphonate, amine, nitrate, thiocyanide, ferrocyanide, or at least an organic acid or salt thereof, and mixtures thereof.

It is an advantage of this embodiment that the iron-complexing agents c) as described herein may improve the rheology of the binder composition by increasing the setting time of the composition, thereby improving workability.

In an embodiment of the composition according to the present invention, said organic acid is one of oxalic acid, tartaric acid, tannic acid, lactic acid or citric acid.

In an embodiment of the composition according to the present invention, said binder composition further comprises at least one further inorganic precursor d), wherein said at least one further inorganic precursor d) is different from said iron-containing silicate precursor a), and wherein said at least one further inorganic precursor d) comprises at least one of a slag, such as a ground granulated blast furnace slag, an ash, such as a fly ash of class C or a fly ash of class F comprising less than 20 wt% Fe, calculated as if present in the form Fe₂O₃, a biomass ash or a bottom ash comprising less than 20 wt% Fe, calcined mine tailings, leach residues from metal extraction, ground glass, cement kiln dust, silica fume, and mixtures thereof.

In an embodiment of the composition according to the present invention, wherein the binder composition further comprises at least one hydraulic compound e), wherein said at least one hydraulic compound e) is at least one of ordinary Portland cement (OPC), calcium aluminate cement, calcium sulphoaluminate cement, as well as mixtures thereof.

In an embodiment of the composition according to the present invention, the binder composition further comprises at least one plasticizing agent f), wherein said at least one plasticizing agent f) is at least one of a naphthalene-based superplasticizer, a lignosulphate, a naphthalene sulphonate, a protein, a melamine-based superplasticizer, a polycarboxylic ether (PCE) or poly acrylic ether (PAE), a salt or derivative thereof, and mixtures thereof.

According to an aspect of the invention, there is provided a concrete or mortar composition comprising the binder composition as described herein and at least one of water, sand, gravel and an aggregate.

According to an aspect of the invention, there is provided a use of a binder as described herein in a mortar or a concrete.

### Brief Description of the Drawings

Various technical effects and advantages of embodiments of the present invention will now be described with reference to the accompanying figures, in which:
- Figure 1 illustrates the effect of iron-complexing agents on the compressive strength of a mortar material containing a binder composition as described herein.
- Figure 2 illustrates the effect of iron-complexing agents on the compressive strength of a mortar material containing a binder composition with a hydraulic compound as described herein.
- Figure 3 illustrates the effect of iron-complexing agents on the compressive strength of a mortar material containing a binder composition with a hydraulic compound and a further inorganic precursor as described herein.
- Figure 4 illustrates the effect of multiple iron-complexing agents on the compressive strength of a mortar material containing a binder composition with a hydraulic compound as described herein.
- Figure 5 illustrates the effect of the iron-complexing agent potassium lactate on the compressive strength of a mortar material containing a binder composition as described herein.
- Figure 6 illustrates the effect of the iron-complexing agent EDTMP on the compressive strength of a mortar material containing a binder composition as described herein.
- Figure 7 illustrates the effect of the iron-complexing agent DTPA on the compressive strength of a mortar material containing a binder composition as described herein.
- Figure 8 illustrates the effect of the iron-complexing agent EDTMP on the compressive strength of a mortar material containing a binder composition not according to the invention.
- Figure 9 illustrates the effect of the iron-complexing agent EDTMP on the compressive strength of a mortar material containing a binder composition not according to the invention.
- Figure 10 illustrates the effect of the iron-complexing agent EDTMP on the compressive strength of a mortar material containing a binder composition not according to the invention.

### Detailed description of the invention

The present invention will be described with respect to particular embodiments and with reference to certain drawings, but the invention is not limited thereto but only by the claims.
Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.
Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.
Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.
In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

For the purpose of the invention, the term "slag" refers herein to a waste material produced during the smelting or refining of metals, which typically occurs by reaction of a flux with impurities.
For the purpose of the invention, the term "cement" refers herein to a substance made for use in mortar or concrete. The term can refer to ordinary Portland cement (OPC). The term "alkali-activated cement" refers to an alternative for OPC, and typically refers to a binder comprising a precursor and an alkali activator.
For the purpose of the invention, the term "D50" refers herein to a mass-median-diameter, considered to be the average particle size by mass. D50 may be measured by experimental techniques such as laser diffraction.

According to an aspect of the invention, there is provided a binder composition for mortar or concrete, comprising:
a) An iron-containing silicate precursor, wherein said silicate comprises at least 20 wt% Fe, calculated as if present in the form Fe₂O₃, and at most 80 wt% Fe, calculated as if present in the form Fe₂O₃, with reference to the dry composition, and wherein said silicate comprises less than 30 wt% Al₂O₃, calculated as if present in the form Al₂O₃, with reference to the dry composition;
b) An alkali-containing activator; and
c) An iron-complexing agent.

According to embodiments of the invention, the binder composition comprises said iron-containing silicate precursor a) in the range of 30 wt% - 99.8 wt% with reference to the total dry composition. Preferably, the binder composition comprises at least 40 wt%, more preferably at least 50 wt%, even more preferably at least 60 wt%, more preferably at least 70 wt%, even more preferably at least 80 wt% and most preferably at least 85 wt% of said iron-containing silicate precursor a) with reference to the total dry composition. It will further be understood that the binder composition preferably comprises at most 99 wt%, more preferably at most 98 wt%, even more preferably at most 97 wt%, more preferably at most 96 wt% and most preferably at most 95 wt% of said iron-containing silicate precursor a) with reference to the total dry composition.

According to embodiments of the invention, the binder composition comprises said alkali-containing activator b) in the range of 0.1 wt% - 15 wt% with reference to the total dry composition.
Preferably, the binder composition comprises at least 0.5 wt%, more preferably at least 1 wt%, even more preferably at least 2 wt%, more preferably at least 3 wt%, and most preferably at least 4 wt% of said alkali-containing activator b) with reference to the total dry composition. It will further be understood that the binder composition preferably comprises at most 14 wt% and most preferably at most 13 wt% of said alkali-containing activator b) with reference to the total dry composition.

According to embodiments of the invention, the binder composition comprises said iron-complexing agent c) in the range of 0.001 wt% - 5 wt% with reference to the total dry composition.
Preferably, the binder composition comprises at least 0.005 wt%, more preferably at least 0.01 wt%, even more preferably at least 0.05 wt%, more preferably at least 0.1 wt%, and most preferably at least 0.2 wt% of said iron-complexing agent c) with reference to the total dry composition. It will further be understood that the binder composition preferably comprises at most 4.5 wt%, more preferably at most 4 wt%, even more preferably at most 3.5 wt%, and most preferably at most 3 wt% of said iron-complexing agent c) with reference to the total dry composition.

It will be clear to the skilled in the art, that, although the concentrations in the composition are given as if the components are present in dry form, the binder composition, or at least one of its components, may be used in, or be present in, the composition in liquid form.

In embodiments according to the invention, the iron-containing silicate precursor a) may be selected from the following:
- a slag, wherein said slag may be a non-ferrous metallurgical slag, such as a zinc metallurgical slag, a nickel metallurgical slag, a lead metallurgical slag, a tin metallurgical slag, or a copper metallurgical slag,
- a stainless-steel metallurgical slag or ferrous metallurgical slag;
- red mud (being bauxite residue);
- fly ash;
- bottom ash;
- Fe-containing clay or Fe-containing calcined clay;
- Fe-containing waste glass;
and mixtures thereof.

The iron-containing silicate precursor a) is preferably ground, e.g. the slag is preferably a ground slag. The non-ferrous metallurgical slag, a product of non-ferrous metallurgical processes, may be a zinc metallurgical slag, a nickel metallurgical slag, a lead metallurgical slag, a tin metallurgical slag or a copper metallurgical slag.
The stainless-steel slag may be a basic oxygen furnace slag (BOF slag) or an electric arc furnace slag (EAF slag).
The fly ash is typically a class F fly ash, which may be produced by the burning of bituminous coal. The fly ash preferably comprises at least 20 wt%, preferably at least 25 wt%, more preferably at least 30 wt%, even more preferably at least 35 wt% and most preferably at least 40 wt% Fe, expressed as Fe₂O₃.
The Fe-containing clay or Fe-containing calcined clay, the latter being e.g. metakaolin (MK)-rich, preferably comprises at least 20 wt%, preferably at least 25 wt%, more preferably at least 30 wt%, even more preferably at least 35 wt% and most preferably at least 40 wt% Fe, expressed as Fe₂O₃.

In preferred embodiments, the iron-containing silicate precursor a) is at least partially amorphous. Preferably, at least 30 wt% of the iron-containing silicate precursor a) is amorphous, more preferably at least 40 wt%, even more preferably at least 50 wt%, more preferably at least 70 wt% and most preferably at least 80 wt%.

In preferred embodiments, the iron-containing silicate precursor a) is ground, meaning composed of powder or milled particles. Typically, the powder particles have a particle size distribution with a mass-median diameter D50 which is at least 500nm, preferably at least 1 µm, more preferably at least 2 µm, even more preferably at least 3 µm, more preferably at least 4 µm, and most preferably at least 5 µm. The skilled person will appreciate that 50% of the particles have a diameter that is less than the indicated number, and 50% of the particles have a diameter that is greater than the indicated number. It will further be understood that the powder particles typically have a particle size distribution with a diameter D50 being at most 50 µm, preferably at most 40 µm, more preferably at most 30 µm, even more preferably at most 20 and most preferably at most 10 µm. The inventors have found that, although in general a lower D50 value is appreciated, excellent results may be obtained when the mass-median diameter D50 is between 1 µm and 20 µm, preferably between 5µm and 10 µm.
When using a metallurgical slag for iron-containing silicate precursor a), said values for the particle size distribution may be obtained by fast cooling or quenching the slag, which usually results in particles in the order of magnitude of mm and has the additional advantage that a substantial part of the particles will be amorphous. Said particles will then typically be milled to obtain powder or milled particles with the desired particle size distribution. It will be clear that increasing the milling time will result in powder particles with a lower value for D50. Several experimental techniques have been used in the state of the art to measure a particle size distribution. The powder particles used herein have been measured by use of laser diffraction, which is a standard technique, more in particular by use of a Beckman Coulter LS 13 320 device.

The air permeability specific surface of a powder material measures the fineness of powder. In preferred embodiments, the air permeability specific surface of the iron-containing silicate precursor a) particles is at least 1000 cm²/g, preferably at least 1500 cm²/g, more preferably at least 2000 cm²/g, even more preferably at least 2500 cm²/g, and most preferably at least 3000 cm²/g. Although no upper limit exists, the air permeability specific surface of the iron-containing silicate precursor a) particles is will typically be at most 15000 cm²/g, at most 13000 cm²/g, at most 11000 cm²/g, at most 9000 cm²/g, or at most 7000 cm²/g. The inventors have found that excellent results can be obtained when the air permeability specific surface of the iron-containing silicate precursor a) particles is between 3000 cm²/g and 7000 cm²/g or in the order of 4000-5000 cm²/g. The air permeability specific surface is measured herein by use of the Blaine method (ASTM C204) using a Blaine Air Permeability Apparatus E009 KIT by Matest.

In preferred embodiments, the iron-containing silicate precursor a) comprises at least 20 wt% Fe, preferably at least 23 wt% Fe, more preferably at least 27 wt% Fe, even more preferably at least 30 wt% Fe, more preferably at least 33 wt% Fe, even more preferably at least 37 wt% Fe and most preferably at least 40 wt% Fe, calculated as if present in the form Fe₂O₃. It will be understood that the iron-containing silicate precursor a) comprises at most 80 wt% Fe, preferably at most 77 wt%, more preferably at most 73 wt%, even more preferably at most 70 wt%, preferably at most 67 wt% Fe, more preferably at most 63 wt% Fe, even more preferably at most 60 wt% Fe, more preferably at most 57 wt% Fe, and most preferably at most 53 wt% Fe, calculated as if present in the form Fe₂O₃. It will be clear to the skilled person that, although the iron content is calculated as if present in the form Fe₂O₃, iron may be present in the composition in other oxidation states.

In preferred embodiments, the iron-containing silicate precursor a) further comprises at least 10 wt% SiO₂, preferably at least 12 wt% SiO₂, more preferably at least 14 wt% SiO₂, even more preferably at least 16 wt% SiO₂, more preferably at least 18 wt% SiO₂, and most preferably at least 20 wt% SiO₂. It will be understood that the iron-containing silicate precursor a) comprises at most 50 wt% SiO₂, preferably at most 47 wt% SiO₂, more preferably at most 43 wt% SiO₂, even more preferably at most 40 wt% SiO₂, more preferably at most 37 wt% SiO₂, even more preferably at most 33 wt% SiO₂ and most preferably at most 30 wt% SiO₂.

Optionally, the iron-containing silicate precursor a) further comprises CaO. According to these embodiments, the iron-containing silicate a) comprises at least 0.01 wt% CaO, preferably at least 0.1 wt% CaO, more preferably at least 1 wt% CaO, even more preferably at least 1.5 wt% CaO, more preferably at least 2 wt% CaO, and most preferably at least 5 wt% CaO. It will be understood that the iron-containing silicate precursor a) comprises at most 30 wt% CaO, or less that 30wt% CaO, preferably at most 27 wt% CaO, more preferably at most 23 wt% CaO, even more preferably at most 20 wt% CaO, and most preferably at most 16 wt% CaO.
According to alternative embodiments, the iron-containing silicate precursor a) contains no CaO or CaO in trace amounts (being less than 0.01 wt% with reference to the total weight of the silicate precursor a)).

Optionally, the iron-containing silicate precursor a) further comprises Al₂O₃. According to these embodiments, the iron-containing silicate a) comprises at least 0.01 wt% Al₂O₃, preferably at least 0.1 wt% Al₂O₃, more preferably at least 1 wt% Al₂O₃, even more preferably at least 2 wt% Al₂O₃, more preferably at least 3 wt% Al₂O₃, even more preferably at least 4 wt% Al₂O₃, and most preferably at least 5 wt% Al₂O₃. It will be understood that the iron-containing silicate precursor a) comprises at most 30 wt% Al₂O₃, or less than 30 wt% Al₂O₃, preferably at most 27 wt% Al₂O₃, more preferably at most 23 wt% Al₂O₃, even more preferably at most 20 wt% Al₂O₃, more preferably at most 17 wt% Al₂O₃, even more preferably at most 13 wt% Al₂O₃, more preferably at most 10 wt% Al₂O₃ and most preferably at most 8 wt% Al₂O₃. According to alternative embodiments, the iron-containing silicate precursor a) contains no Al₂O₃ or Al₂O₃ in trace amounts (being less than 0.01 wt% with reference to the total weight of the silicate precursor a)).

Optionally, the iron-containing silicate precursor a) further comprises MgO. According to these embodiments, the iron-containing silicate precursor a) comprises at least 0.01 wt% MgO, preferably at least 0.1 wt% MgO, more preferably at least 0.2 wt% MgO, even more preferably at least 0.4 wt% MgO, more preferably at least 0.6 wt% MgO, even more preferably at least 0.8 wt% MgO, and most preferably at least 1.0 wt% MgO. It will be understood that the iron-containing silicate precursor a) comprises at most 20 wt% MgO, preferably at most 15 wt% MgO, more preferably at most 10 wt% MgO, even more preferably at most 5 wt% MgO, more preferably at most 4 wt% MgO, and most preferably at most 3 wt% MgO. According to alternative embodiments, the iron-containing silicate precursor a) contains no MgO or MgO in trace amounts (being less than 0.01 wt% with reference to the total weight of the silicate precursor a)).

In preferred embodiments according to the invention, the alkali-containing activator b) comprises at least one alkali metal or earth alkali metal.
The role of the activator is typically to increase the pH of the binder in the binder-water-aggregate and/or sand and/or gravel mixture promoting or speeding up the setting, curing and/or hardening of the mixture. The activator can be in powder form or in liquid form.

Preferably, said alkali-containing activator comprises at least one salt or salt solution of an alkali metal or earth alkali metal.
In preferred embodiments, the alkali-containing activator comprises at least one oxide, hydroxide, silicate, carbonate, aluminate, sulphate, aluminosulphate, fluoride, fluorosilicate, fluoroaluminate (or aluminium hexafluoride) of an alkali metal or earth alkali-metal, or mixtures thereof.
Preferably, the alkali-containing activator comprises at least one of the following: potassium silicate (K₂O. nSiO₂ with n = 0.5-4), K₂SO₄, sodium silicate (Na₂O. nSiO₂ with n = 0.5-4), Na₂SO₄, K₂O, Na₂O, NaOH, KOH, NaAlO₂, Na2SiF6, Na3AIF6, K2SiF6, K₃AlF₆, MgSiF₆, KAl(SO₄)₂, Na₂CO₃, K₂CO₃, Ca(OH)2, CaO, MgO, Mg(OH)2 and mixtures thereof.

In preferred embodiments according to the invention, the iron-complexing agent c) comprises at least one salt having a functional group selected from sulphonate, cyanide, phosphate, phosphonate, amine, nitrate, thiocyanide, ferrocyanide, or at least an organic acid or salt thereof; and mixtures thereof. Preferably, said organic acid is one of oxalic acid, tartaric acid, lactic acid, tannic acid or citric acid.
It is thought that a possible role of the iron-complexing agent is to improve the mobility and/or solubility of the Fe-containing species and/or to increase precipitation of the Fe-containing species.
The iron-complexing agent can be in powder form or in liquid form, e.g. a salt solution.
Preferably, the iron-complexing agent c) comprises at one of the following: EDTMP (ethylenediamine-tetra[methylene phosphonic acid]), sodium oxalate, DTPA (diethylenetriaminopenta-acetic acid), HEDP (Hydroxyethylidene-1,1-diphosphonic acid), tartaric acid, cream of tartar, sodium tartrate, potassium tartrate, tannic acid, sodium lactate, Ca(NO₃)₂, potassium lactate, K₃PO₄ and mixtures thereof.

In embodiments according to the invention, the binder composition further comprises at least one of the following:
d) At least one further inorganic precursor
e) At least one hydraulic compound
f) At least one plasticizing agent
g) Water

In embodiments according to the invention, the binder composition further comprises at least one further inorganic precursor d), wherein said at least one further inorganic precursor d) is different from said iron-containing silicate precursor a).
Preferably, said at least one further inorganic precursor d) is a mineral precursor.
Said at least one further inorganic precursor d) can be a powder or can be composed of particles. In preferred embodiments, the air permeability specific surface of the at least one further inorganic precursor d) particles is at least 1000 cm²/g, preferably at least 2000 cm²/g, and most preferably at least 3000 cm²/g. It will further be understood that the air permeability specific surface of the at least one further inorganic precursor d) particles is at most 10000 cm²/g, preferably at most 7000 cm²/g. Preferably, the at least one further inorganic precursor d) comprises at least one of a slag, such as a ground granulated blast furnace slag, an ash, such as a fly ash of class C or a fly ash of class F comprising less than 20 wt% Fe, a bottom ash or a biomass ash comprising less than 20 wt% Fe, calcined mine tailings, leach residues from metal extraction, ground glass, cement kiln dust, silica fume, and mixtures thereof. According to embodiments of the invention, when present in the binder composition, the binder composition comprises said at least one further inorganic precursor d) in the range of 0.01 wt% - 50 wt% with reference to the total dry composition.
Preferably, the binder composition comprises at least 0.1 wt%, more preferably at least 1 wt%, even more preferably at least 2 wt%, more preferably at least 3 wt%, even more preferably at least 5 wt% and most preferably at least 10 wt% of said at least one further inorganic precursor d) with reference to the total dry composition. It will be further understood that the binder composition preferably comprises at most 40 wt%, more preferably at most 35 wt%, even more preferably at most 30 wt%, and most preferably at most 25 wt% of said at least one further inorganic precursor d) with reference to the total dry composition.
According to alternative embodiments, the binder composition does not contain said at least one further inorganic precursor d) or only in trace amounts (being less than 0.01 wt% with reference to the dry composition).

In embodiments according to the invention, the binder composition further comprises at least one hydraulic compound e).
Preferably, the at least one hydraulic compound e) comprises at least one of ordinary Portland cement (OPC), calcium aluminate cement, calcium sulphoaluminate cement, as well as mixtures thereof.
Said OPC may be at least one of CEM I, CEM II, CEM III, CEM IV or CEM V, according to EN 197-1. According to embodiments of the invention, when present in the binder composition, the binder composition comprises said at least one hydraulic compound e) in the range of 0.01 wt% - 50 wt% with reference to the total dry composition.
Preferably, the binder composition comprises at least 0.1 wt%, more preferably at least 1 wt%, even more preferably at least 5 wt%, more preferably at least 10 wt%, even more preferably at least 20 wt% and most preferably at least 25 wt% of said at least one hydraulic compound e) with reference to the total dry composition. It will be further understood that the binder composition preferably comprises at most 50 wt%, more preferably at most 45 wt%, even more preferably at most 40 wt%, and most preferably at most 35 wt% of said at least one hydraulic compound e) with reference to the total dry composition. According to alternative embodiments, the binder composition does not contain said at least one hydraulic compound e) or only in trace amounts (being less than 0.01 wt% with reference to the dry composition).

In embodiments according to the invention, the binder composition further comprises at least one plasticizing agent f).
Preferably, the at least one plasticizing agent f) comprises at least one of a naphthalene-based superplasticizer, a lignosulphate, a naphthalene sulphonate, a protein, a melamine-based superplasticizer, a polycarboxylic ether (PCE) or poly acrylic ether (PAE), a salt or derivative thereof, and mixtures thereof.
Preferably, the at least one plasticizing agent f) comprises at least PCE-based superplasticizer or consists of a PCE-based superplasticizer.
According to embodiments of the invention, when present in the binder composition, the binder composition comprises said at least one plasticizing agent f) in the range of 0.01 wt% - 5 wt% with reference to the total dry composition.
Preferably, the binder composition comprises at least 0.1 wt%, more preferably at least 0.5 wt%, even more preferably at least 1 wt%, and most preferably at least 2 wt% of said at least one plasticizing agent f) with reference to the total dry composition. It will be further understood that the binder composition preferably comprises at most 5.0 wt%, more preferably at most 4.5 wt%, even more preferably at most 4.0 wt%, and most preferably at most 3.5 wt% of said at least one plasticizing agent f) with reference to the total dry composition.
According to alternative embodiments, the binder composition does not contain said at least one plasticizing agent f) or only in trace amounts (being less than 0.01 wt% with reference to the dry composition).

While the invention has been described hereinabove with reference to specific embodiments, this is done to illustrate and not to limit the invention, the scope of which is defined by the accompanying claims. The skilled person will readily appreciate that different combinations of features than those described herein are possible without departing from the scope of the claimed invention.

### EXPERIMENTAL RESULTS

The invention will be now described in more details with reference to the following examples, whose purpose is merely illustrative and not intended to limit the scope of the invention.

The following raw materials, as summarized in Table 1, have been used in the experiments below.

**Table 1 - compositions for iron-containing silicate precursor a) (ICSP) and alternative precursors (GGBFS, Fly Ash and Metakaolin)**

| | Fe₂O₃ | SiO₂ | CaO | Al₂O₃ | MgO | Blaine surface (cm²/g) |
|---|---|---|---|---|---|---|
| ICSP 1 | 50.3 | 26.8 | 3.1 | 7.6 | 1.2 | 4000 +/- 300 |
| ICSP 2 | 61.5 | 25.9 | 1.9 | 3 | 1.1 | 4500 +/- 300 |
| ICSP 3 | 41.1 | 24.6 | 19.1 | 5.4 | 2.7 | 5500 +/- 300 |
| | | | | | | |
| GGBFS | 0.6 | 33.1 | 41.8 | 14 | 5.9 | 4500 +/- 300 |
| Fly Ash | 5.8 | 54.3 | 1.9 | 28.2 | 1.6 | 3500 +/- 300 |
| Metakaolin | 2 | 55.7 | 0.2 | 41.2 | 0.3 | - |

wherein the components of said iron-containing silicate precursor a) are expressed in weight. As is known by the skilled person, the remainder of a precursor composition, such as a slag or an ash, is usually made up of a large number of compounds (typically 10-20) which are typically present in small concentrations. Metakaolin as used herein has a d50 value of 10µm.

In the experiments below, compositions for a series of binders are presented. The compositions are prepared by mixing the dry components of the mixture, followed by adding under continuous mixing the components in liquid form, the latter being typically water and at least one alkali-containing activator. Sand as used herein is CEN Standard Sand. The components in the experiments below are expressed in weight.
After adding all components, mixing is typically done for a period of a few minutes, the period used in the experiments herein is 3 minutes. In a subsequent step, the mixture is casted into beams with dimensions 40^{∗}40^{∗}160mm³ and allowed to cure at room temperature with a strength profile being measured at different times after preparing the mixture (1 day, 2 days, 7 days, and 28 days). The increase in strength is regarded as evidence for an effect of improved reactivity and durability of the binder.

Compressive strength was measured according to EN 196-1 using a compression and flexural testing machine (300/15 kN), Cyber-plus evolution E181N by Matest.

### Examples 1-3 (E1-E3) - Counter Example 1 (CE1) - effect of iron-complexing agent

Binder compositions were defined, having the following compositions as summarized in Table 2.

**Table 2**

| | a) | | b) | | c) | | Water | Sand |
|---|---|---|---|---|---|---|---|---|
| CE1 | 1000 | ICSP1 | 90 | K-silicate (n=1.65) | - | - | 360 | 3000 |
| E1 | 1000 | ICSP1 | 90 | K-silicate (n=1.65) | 1 | EDTMP | 360 | 3000 |
| E2 | 1000 | ICSP1 | 90 | K-silicate (n=1.65) | 1 | DTPA | 360 | 3000 |
| E3 | 1000 | ICSP1 | 90 | K-silicate (n=1.65) | 10 | Sodium oxalate | 360 | 3000 |

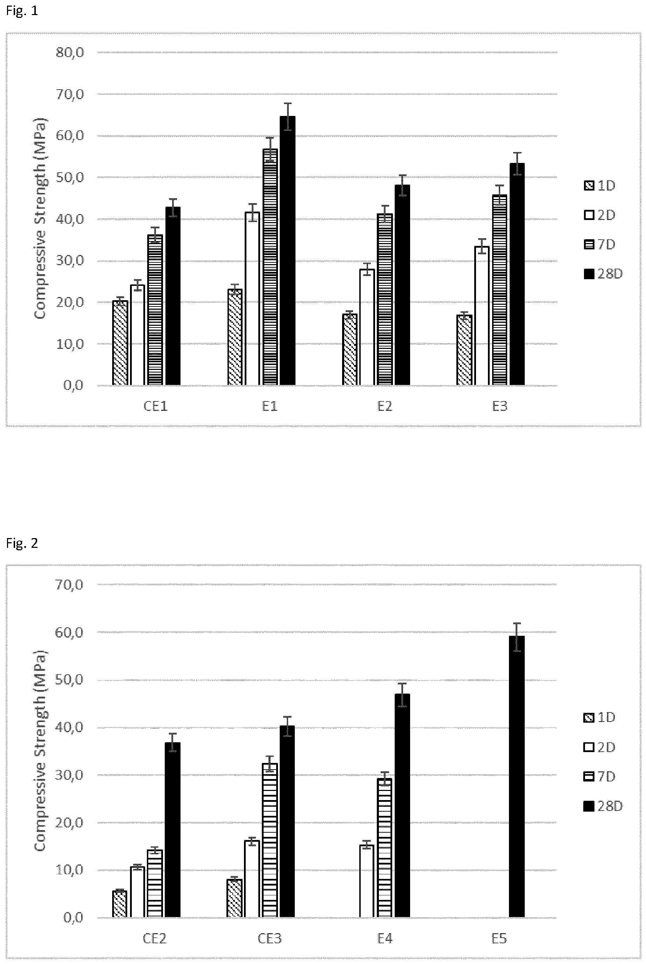

The development of compressive strength (strength profile) is presented in Fig. 1, which shows the effect of the combination of alkali-containing activator b) and iron-complexing agent c), compared to only the alkali-containing activator b) for use with an iron-containing silicate precursor a) with high iron concentration. Adding an iron-complexing agent c) as described herein increases the strength of the final material. The effect can be observed for all three selected iron-complexing agents from 2 days onwards.

### Examples 4-5 (E4-E5) - Counter Examples 2-3 (CE2-CE3) - effect of iron-complexing agent in hybrid system (with hydraulic compound)

Binder compositions were defined, having the following compositions as summarized in Table 3. The term CEM I 52.5R refers herein to the strength class of the cement CEM I.

**Table 3**

| | a) | | b) | | c) | | e) | | Water | Sand |
|---|---|---|---|---|---|---|---|---|---|---|
| CE2 | 700 | ICSP1 | - | - | - | - | 300 | CEM I 52.5R | 400 | 3000 |
| CE3 | 700 | ICSP1 | 40 | Potassium sulfate | - | - | 300 | CEM I 52.5R | 400 | 3000 |
| E4 | 700 | ICSP1 | 40 | Potassium sulfate | 1 | EDTMP | 300 | CEM I 52.5R | 400 | 3000 |
| E5 | 700 | ICSP1 | 40 | Potassium sulfate | 10 | EDTMP | 300 | CEM I 52.5R | 400 | 3000 |

The development of compressive strength (strength profile) is presented in Fig. 2.
Fig. 2 illustrates the effect of a 70/30 hybrid system, with 70% of a precursor a) with high iron concentration and 30% of a hydraulic compound e). Curing said mixture in combination with components b) and c) as described herein has a positive effect on strength development, although such effect is visible in the end-strength, while in an early phase, compressive strength may be difficult to measure.

### Example 6 (E6) - Counter Examples 4-5 (CE4-CE5) - effect of iron-complexing agent in hybrid system (with hydraulic compound and a further inorganic precursor)

Binder compositions were defined, having the following compositions as summarized in Table 4.

**Table 4**

| | a) | | b) | | c) | | d) | | e) | | Water | Sand |
|---|---|---|---|---|---|---|---|---|---|---|---|---|
| CE4 | 500 | ICSP1 | - | - | - | - | 200 | GGBFS | 300 | CEM I 52.5R | 400 | 3000 |
| CE5 | 500 | ICSP1 | 40 | Potassium sulfate | - | - | 200 | GGBFS | 300 | CEM I 52.5R | 400 | 3000 |
| E6 | 500 | ICSP1 | 40 | Potassium sulfate | 0.5 | EDTMP | 200 | GGBFS | 300 | CEM I 52.5R | 400 | 3000 |

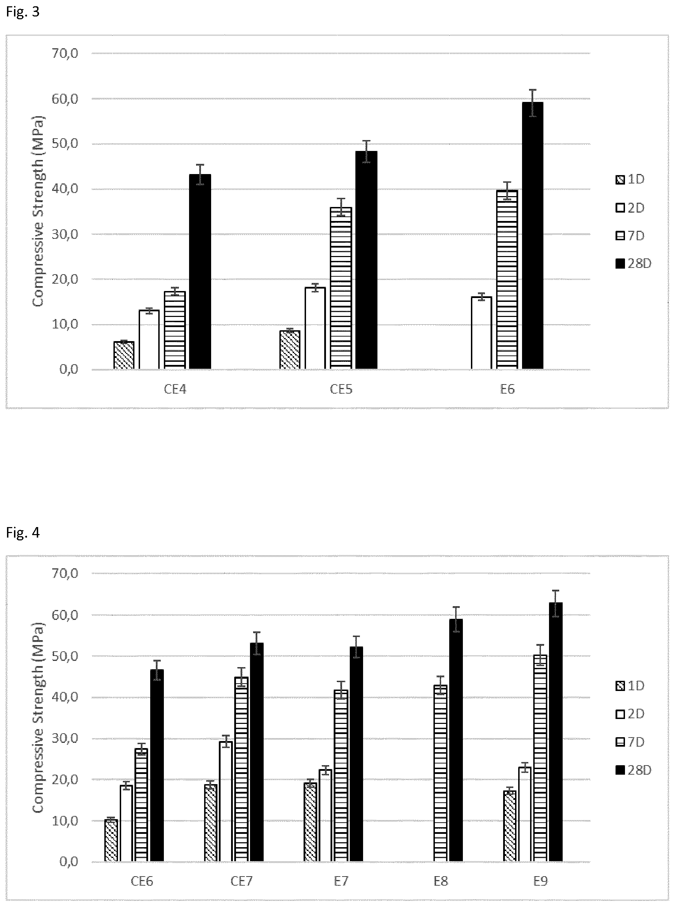

The development of compressive strength (strength profile) is presented in Fig. 3.
Fig. 3 illustrates the effect of an iron-complexing agent in a 50/20/30 hybrid system, having 50% of an iron-containing silicate precursor a), 20% of a further inorganic precursor d) and 30% of a hydraulic compound e). The addition of an iron-complexing agent has a positive effect on compressive strength from day 7 onwards.

### Examples 7-9 (E7-E9) - Counter Examples 6-7 (CE6-CE7) - effect of use of multiple iron-complexing agents in hybrid system (with hydraulic compound)

Binder compositions were defined, having the following compositions as summarized in Table 5.

**Table 5**

| | a) | | b) | | c) | | c') | | e) | | Water | Sand |
|---|---|---|---|---|---|---|---|---|---|---|---|---|
| CE6 | 600 | ICSP1 | - | - | - | - | - | - | 400 | CEM I 52.5R | 400 | 3000 |
| CE7 | 600 | ICSP1 | 40 | sodium sulfate | - | - | - | - | 400 | CEM I 52.5R | 400 | 3000 |
| E7 | 600 | ICSP1 | 40 | sodium sulfate | 10 | Sodium lactate | - | - | 400 | CEM I 52.5R | 400 | 3000 |
| E8 | 600 | ICSP1 | 40 | sodium sulfate | - | - | 1 | EDTMP | 400 | CEM I 52.5R | 400 | 3000 |
| E9 | 600 | ICSP1 | 40 | sodium sulfate | 10 | Sodium lactate | 1 | EDTMP | 400 | CEM I 52.5R | 400 | 3000 |

The development of compressive strength (strength profile) is presented in Fig. 4.
Fig. 4 illustrates the effect of iron-complexing agents in a 60/40 hybrid system, having 60% of an iron-containing silicate precursor a), and 40% of a hydraulic compound e). The combination of sodium lactate and EDTMP provides an excellent strength profile at all ages.

### Example 10 (E10) - Counter Example 8 (CE8) - effect of iron-complexing agent

Binder compositions were defined, having the following compositions as summarized in Table 6.

**Table 6**

| | a) | | b) | | c) | | Water | Sand |
|---|---|---|---|---|---|---|---|---|
| CE8 | 1000 | ICSP1 | 120 | K-silicate (n=1.65) | - | - | 330 | 3000 |
| E10 | 1000 | ICSP1 | 90 | K-silicate (n=1.65) | 30 | Potassium lactate | 330 | 3000 |

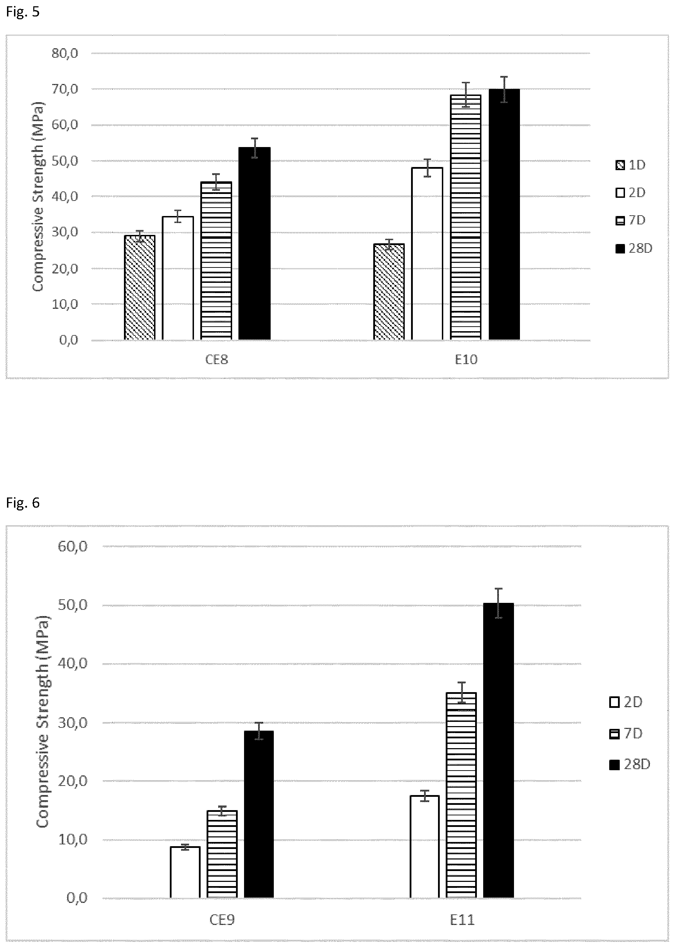

The development of compressive strength (strength profile) is presented in Fig. 5, which shows the effect of the combination of alkali-containing activator b) and iron-complexing agent c), compared to only the alkali-containing activator b) for use with an iron-containing silicate precursor a) with high iron concentration. Adding an iron-complexing agent c) as described herein increases the strength of the final material. The effect can be observed from 2 days onwards.

### Example 11 (E11) - Counter Example 9 (CE9) - effect of iron-complexing agent

Binder compositions were defined, having the following compositions as summarized in Table 7.

**Table 7**

| | a) | | b) | | c) | | Water | Sand |
|---|---|---|---|---|---|---|---|---|
| CE9 | 1000 | ICSP2 | 112.5 | K-silicate (n=1.65) | - | - | 337.5 | 3000 |
| E11 | 1000 | ICSP2 | 112.5 | K-silicate (n=1.65) | 1 | EDTMP | 337.5 | 3000 |

The development of compressive strength (strength profile) is presented in Fig. 6, which shows the effect of the combination of alkali-containing activator b) and iron-complexing agent c), compared to only the alkali-containing activator b) for use with an iron-containing silicate precursor a) with high iron concentration. Adding an iron-complexing agent c) as described herein increases the strength of the final material. The effect can be observed from 2 days onwards.

### Example 12 (E12) - Counter Example 10 (CE10) - effect of iron-complexing agent

Binder compositions were defined, having the following compositions as summarized in Table 8.

**Table 8**

| | a) | | b) | | c) | | Water | Sand |
|---|---|---|---|---|---|---|---|---|
| CE10 | 1000 | ICSP3 | 90 | K-silicate (n=1.00) | - | - | 360 | 3000 |
| E12 | 1000 | ICSP3 | 90 | K-silicate (n=1.00) | 2 | DTPA | 360 | 3000 |

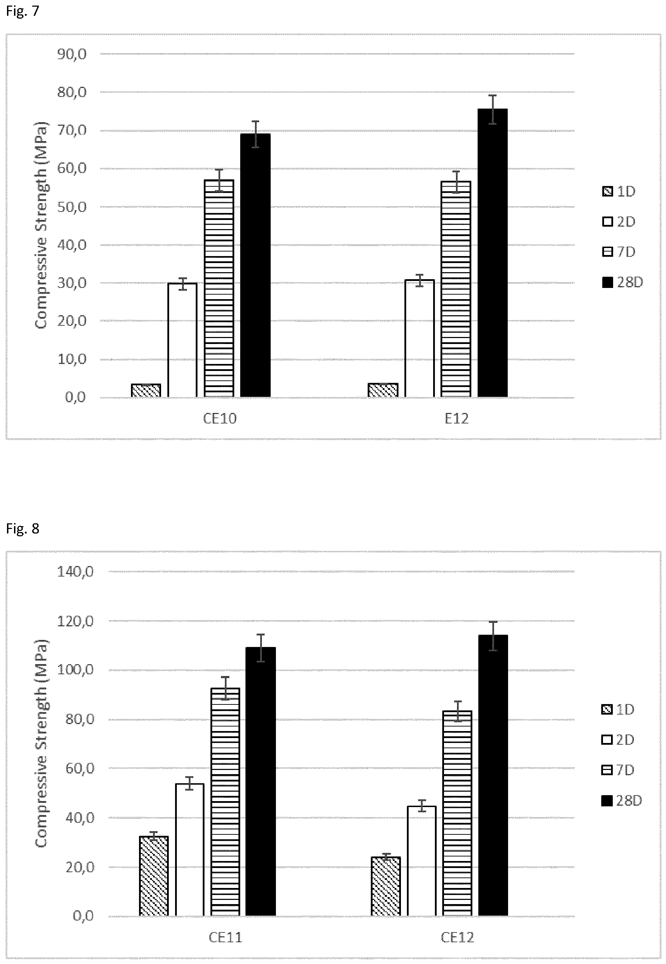

The development of compressive strength (strength profile) is presented in Fig. 7, which shows the effect of the combination of alkali-containing activator b) and iron-complexing agent c), compared to only the alkali-containing activator b) for use with an iron-containing silicate precursor a) with high iron concentration. Adding an iron-complexing agent c) as described herein increases the strength of the final material. The effect is observed at 28 days.

### Counter Examples 11-12 (CE11-CE12) - effect of activator and iron-complexing agent on GGBFS

Binder compositions were defined, having the following compositions as summarized in Table 9.

**Table 9**

| | a) | | b) | | c) | | Water | Sand |
|---|---|---|---|---|---|---|---|---|
| CE11 | 1000 | GGBFS | 90 | K-silicate (n=1.65) | - | - | 360 | 3000 |
| CE12 | 1000 | GGBFS | 90 | K-silicate (n=1.65) | 2 | EDTMP | 360 | 3000 |

The development of compressive strength (strength profile) is presented in Fig. 8, which shows that the addition of EDTMP to a combination of an alkali-containing activator b) according to the invention and GGBFS does not have an effect on the strength development or the strength of the final material.

### Counter Examples 13-14 (CE13-CE14) - effect of activator and iron-complexing agent on fly ash

Binder compositions were defined, having the following compositions as summarized in Table 10.

**Table 10**

| | a) | | b) | | c) | | Water | Sand |
|---|---|---|---|---|---|---|---|---|
| CE13 | 1000 | Fly Ash | 90 | K-silicate (n=1.00) | - | - | 360 | 3000 |
| CE14 | 1000 | Fly ASh | 90 | K-silicate (n=1.00) | 1 | EDTMP | 360 | 3000 |

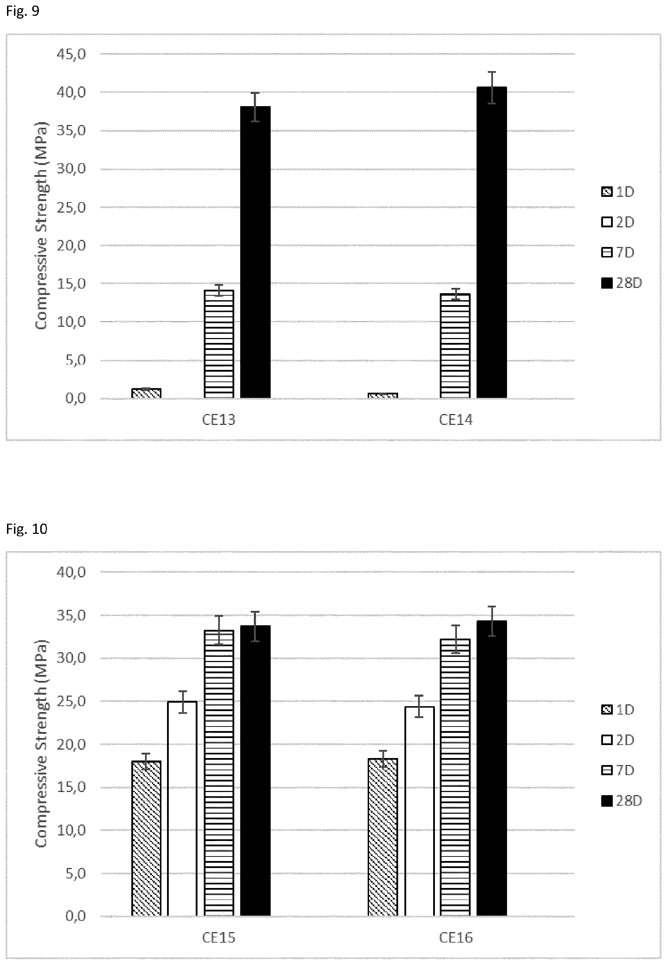

The development of compressive strength (strength profile) is presented in Fig. 9, which shows that the addition of EDTMP to a combination of an alkali-containing activator b) according to the invention and fly Ash does not have an effect on the strength development or the strength of the final material.

### Counter Examples 15-16 (CE15-CE16) - effect of activator and iron-complexing agent on Metakaolin

Binder compositions were defined, having the following compositions as summarized in Table 10.

**Table 10**

| | a) | | b) | | c) | | Water | Sand |
|---|---|---|---|---|---|---|---|---|
| CE15 | 1000 | Metakaolin | 150 | K-silicate (n=1.00) | - | - | 350 | 3000 |
| CE16 | 1000 | Metakaolin | 150 | K-silicate (n=1.00) | 1 | EDTMP | 350 | 3000 |

The development of compressive strength (strength profile) is presented in Fig. 10, which shows that the addition of EDTMP to a combination of an alkali-containing activator b) according to the invention and Metakaolin does not have an effect on the strength development or the strength of the final material.

## Claims

1. A binder composition for mortar or concrete, comprising:
a) An iron-containing silicate precursor, wherein said silicate precursor comprises at least 20 wt% Fe, calculated as if present in the form Fe₂O₃, and at most 80 wt% Fe, calculated as if present in the form Fe₂O₃, with reference to the dry composition, and wherein said silicate precursor comprises at most 30 wt% Al₂O₃, with reference to the dry composition;
b) An alkali-containing activator; and
c) An iron-complexing agent.

2. The binder composition according to claim 1, wherein said binder comprises from 30 to 99.8 wt% of said iron-containing silicate precursor a), from 0.1 to 15 wt% of said alkali-containing activator b), and from 0.001 to 5 wt% of said iron-complexing agent c) with reference to the dry composition.

3. The binder composition according to claim 1 or claim 2, wherein said iron-containing silicate precursor a) further comprises at least 10 wt% and at most 50 wt% SiO₂, with reference to the dry composition.

4. The binder composition according to any of previous claims, wherein said iron-containing silicate precursor a) may be selected from the following:
- a slag, wherein said slag may be a non-ferrous metallurgical slag, such as a zinc metallurgical slag, a nickel metallurgical slag, a lead metallurgical slag, a tin metallurgical slag, or a copper metallurgical slag,
- stainless steel slag or ferrous metallurgical slag;
- red mud;
- fly ash;
- bottom ash;
- Fe-containing clay or Fe-containing calcined clay;
- Fe-containing waste glass;
and mixtures thereof.

5. The binder composition according to any of previous claims, wherein at least 30 wt% of said iron-containing silicate precursor a) is amorphous.

6. The binder composition according to any of previous claims, wherein said alkali-containing activator b) comprises at least one salt or salt solution of an alkali metal or earth alkali metal.

7. The binder composition according to claim 6, wherein said alkali-containing activator b) comprises at least one oxide, hydroxide, silicate, carbonate, aluminate, aluminosulphate, sulphate, fluoride, fluorosilicate, fluoroaluminate (or aluminium hexafluoride) of an alkali metal or earth alkali-metal, or mixtures thereof.

8. The binder composition according to any of previous claims, wherein the iron-complexing agent c) comprises at least one salt having a functional group selected from sulphonate, cyanide, phosphate, phosphonate, amine, nitrate, thiocyanide, ferrocyanide, or at least an organic acid or salt thereof; and mixtures thereof.

9. The binder composition according to claim 8, wherein said organic acid is one of oxalic acid, tartaric acid, tannic acid, lactic acid or citric acid.

10. The binder composition according to any of previous claims, wherein said binder composition further comprises at least one further inorganic precursor d), wherein said at least one further inorganic precursor d) is different from said iron-containing silicate precursor a), and wherein said at least one further inorganic precursor d) comprises at least one of a slag, such as a ground granulated blast furnace slag, an ash, such as a fly ash of class C or a fly ash of class F comprising less than 20 wt% Fe, a biomass ash or a bottom ash comprising less than 20 wt% Fe, calcined mine tailings, leach residues from metal extraction, ground glass, cement kiln dust, silica fume, and mixtures thereof.

11. The binder according to any of previous claims, wherein the binder composition further comprises at least one hydraulic compound e), wherein said at least one hydraulic compound e) is at least one of ordinary Portland cement (OPC), calcium aluminate cement, calcium sulphoaluminate cement, as well as mixtures thereof.

12. The binder according to any of previous claims, wherein the binder composition further comprises at least one plasticizing agent f), wherein said at least one plasticizing agent f) is at least one of a naphthalene-based superplasticizer, a lignosulphate, a protein, a naphtalene sulphonate, a melamine-based superplasticizer, a polycarboxylic ether (PCE) or poly acrylic ether (PAE), a salt or derivative thereof, and mixtures thereof.

13. A concrete or mortar composition comprising the binder composition according to any one of claims 1-12 and at least one of water, sand, gravel and an aggregate.

14. Use of a binder according to claims 1-12 in a mortar or a concrete.
